# EUROPEAN PATENT APPLICATION

(11) **EP 2 247 123 A2**
(43) Date of publication of application: **03.11.2010**
(21) Application number: 09173442.6
(22) Date of filing: 19.10.2009
(51) Int. Cl.: H04R 5/02

(54) **Display apparatus and control method of the same**

(30) Priority: 30.04.2009 KR 20090038420
(71) Applicant: SAMSUNG ELECTRONICS CO., LTD., Suwon-si Gyeonggi-do 442-742 (KR)
(72) Inventor: Jeong, Jae-kwon, Suwon-si, Gyeonggi-do (KR)
(74) Representative: Grootscholten, Johannes A.M.

(57) **Abstract**

Provided are a display apparatus and a control method of the same. The display apparatus includes a signal separator which separates an audio signal and a video signal from at least one contents; an audio unit which processes and outputs the audio signal; a video unit which processes and outputs the video signal; a sensor which senses at least one viewing group viewing the video signal output by the video unit; and a controller which controls the audio unit to output the audio signal toward the sensed viewing group.

## Description

### 1. Field

Apparatuses and methods consistent with the general inventive concept relate to a display apparatus and a control method of the same, and more particularly, to a display apparatus capable of outputting sound through ultrasonic waves and a control method of the same.

### 2. Description of the Related Art

A display apparatus that displays contents is provided with various kinds of speakers to output an audio signal of the contents. Most of the speakers are a non-directional speaker that propagates sound irrespective of direction, which may result in unwanted noise to someone who does not view the contents. Further, in the case of viewing a plurality of screens such as a main screen and a sub screen, it is inconvenient since a separate device such as a headphone or an earphone is needed.

On the other hand, a directional speaker that outputs sound in a certain direction is fastened to a partial area of the display apparatus. Thus, if a user views the contents away from a direction (e.g., front direction) in which sound is output, it is difficult for the user to listen to the sound of high quality.

Accordingly, an aspect of one or more embodiments is to provide a display apparatus which outputs sound that is convenient to listen to without any separate device or user's manipulation, and a control method of the same.

Another aspect of one or more embodiments is to provide a display apparatus providing various methods for outputting sound, and a control method of the same.

Still another aspect of one or more embodiments is to provide a display apparatus capable of adjusting a directivity angle depending on scales of a viewing group, and a control method of the same.

According to an aspect of one or more embodiments, there is provided a display apparatus including: a signal separator which separates an audio signal and a video signal from at least one contents; a video unit which processes and outputs the video signal; a sensor which senses at least one viewing group viewing the video signal output by the video unit; and a controller which controls the audio unit to output the audio signal toward the sensed viewing group.

The video unit may include a display unit and a video processor to process the video signal to be displayed as at least one viewing screen on the display unit, and if the video signal is displayed as a plurality of viewing screens on the display unit, the controller may determine a viewing screen for the viewing group, among the viewing screens, based on an angle between a virtual line extending between the viewing group and a center of each of the viewing screens, and a surface normal at the center of each of the viewing screens, and controls the audio unit to output an audio signal corresponding to the determined viewing screen toward the viewing group.

The video unit comprises a display unit and a video processor to process the video signal to be displayed as at least one viewing screen on the display unit, and if the video signal is displayed as a plurality of viewing screens, the controller may control the audio unit to output an audio signal corresponding to a preset viewing screen toward the viewing group.

If the viewing screens are divided horizontally on the display unit to display the video signal, the preferred screen may be displayed as a left-most screen.

If the viewing screens are divided vertically on the display unit to display the video signal, the present viewing screen may be displayed as an upper-most screen.

The video unit may include a display unit and a video processor to process the video signal so that the contents are displayed as at least one viewing screen on the display unit, and if the number of the at least one viewing group is equal to a number of the at least one viewing screen, the controller may control the audio unit to output audio signals so that each of the audio signals corresponds to a respective viewing screen of the at least one viewing screen is output toward a respective viewing group of the at least one viewing group.

The controller may control the audio unit so that a directivity angle or an intensity of the audio signal is adjusted according to at least one of a scale and the number of the at least one viewing group.

The audio unit may further include an audio processor which converts the audio signal into an ultrasonic signal.

The viewing group may include at least one user, and the sensor may sense at least one of the viewer's eyes, the viewer's face direction, the viewer's posture and a direction pointed by a part of the viewer's body.

The display apparatus may further include a user interface to adjust an output direction of the audio signal.

According to an aspect of one or more embodiments, there is provided a display apparatus including: a signal receiver which receives at least one contents; a signal separator which separates an audio signal and a video signal from the contents; an audio unit which processes and outputs the audio signal; a video unit which processes and outputs the video signal; a sensor which senses at least one viewing group viewing the video signal output by the video unit; and a controller which controls the video unit and the audio unit to output the video signal and the audio signal based on a position of the sensed viewing group.

The video unit may include a display unit and a video processor to process the video signal to be displayed as a plurality of viewing screens on the display unit, and the controller may control the video processor to display the video signal on at least one viewing acreen of the plurality of viewing screens based on the position of the sensed viewing group, and controls the audio unit to output the audio signal in a frontward direction of the at least one viewing screen on which the video signal is displayed.

The video signal may be popped up on the display unit.

According to another aspect of one or more embodiments, there is provided a method of controlling a display apparatus, the method including: separating an audio signal and a video signal from the contents; sensing at least one viewing group viewing display of the video signal on the display apparatus; and outputting the audio signal toward the sensed viewing group.

According to still another aspect of one or more embodiments, there is provided a method of controlling a display apparatus, the method including: receiving at least one contents; separating an audio signal and a video signal from the contents; sensing at least one viewing group viewing display of the video signal on the display apparatus; outputting the video signal and the audio signal toward the sensed viewing group.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a control block diagram of a display apparatus according to an exemplary embodiment;
FIGS. 2A and 2B are views for explaining a method of determining a viewing screen in the display apparatus of FIG. 1, according to an exemplary embodiment;
FIG. 3 is a view for explaining a method of determining a preferred screen in the display apparatus of FIG. 1, according to another exemplary embodiment;
FIG. 4 is a view for explaining another method of determining a viewing screen in the display apparatus of FIG. 1, according to still another exemplary embodiment;
FIG. 5 is a view for explaining a method of determining a viewing screen in the display apparatus of FIG. 1, according to still another exemplary embodiment;
FIG. 6 is a view for explaining a method of adjusting a directivity angle of an ultrasonic signal in the display apparatus of FIG. 1, according to an exemplary embodiment;
FIG. 7 is a flowchart for explaining a method of controlling an audio signal in the display apparatus of FIG. 1, according to an exemplary embodiment;
FIG. 8 is a block diagram of a display apparatus according to another exemplary embodiment;
FIG. 9 is a view for explaining a method of outputting a video signal and an audio signal in the display apparatus according to still another exemplary embodiment; and
FIG. 10 is a flowchart for explaining a control method for the display apparatus of FIG. 9, according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may have various forms and are not limited to those described herein. Descriptions of well-known parts are omitted for clarity, and like reference numerals refer to like elements throughout.

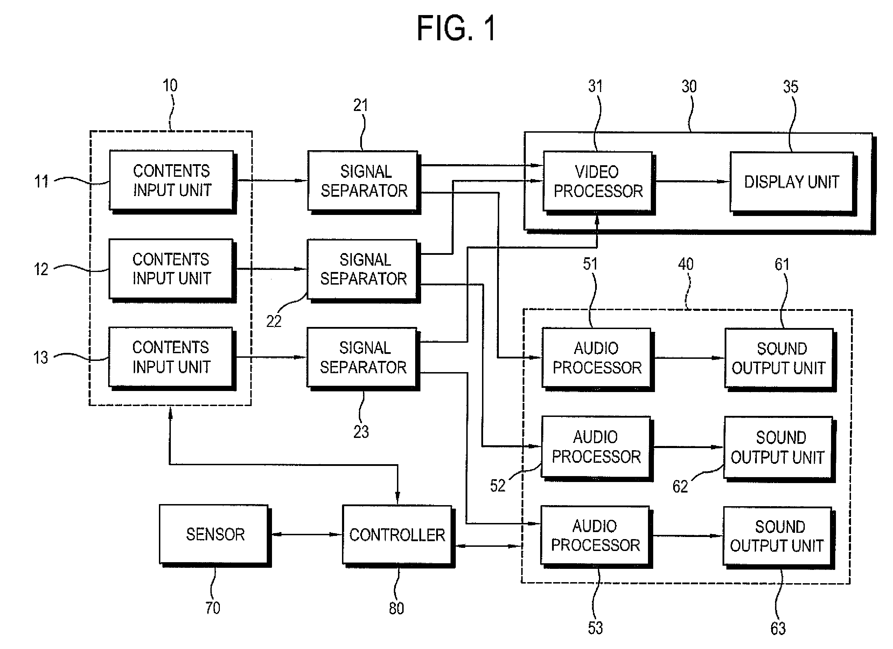

FIG. 1 is a block diagram of a display apparatus according to an exemplary embodiment. As shown therein, a display apparatus 100 includes a signal receiver 10, a plurality of signal separators 21, 22 and 23, a video unit 30, an audio unit 40, a sensor 70, and a controller 80. The video unit 30 includes a video processor 31, and a display unit 35 to display a video signal processed by the video processor 31.

The signal receiver 10 includes a plurality of contents input units 11, 12 and 13 to which a plurality of contents are input simultaneously or non-simultaneously. The contents input units 11, 12 and 13 may include at least one of a tuner (not shown) to receive a broadcasting signal, a connector (not shown) to which a contents source is connected, and a network interface (not shown) to communicate via a network. Further, the contents input units 11, 12 and 13 may include a plurality of tuners (not shown) to receive a plurality of broadcasting signals for displaying corresponding screens (e.g., a main screen and a sub screen), or a camcorder interface (not shown) or the like to receive contents to be displayed simultaneously with a broadcasting signal.

The contents output from the contents input units 11, 12 and 13 of the signal receiver 10 are input to the signal separators 21, 22 and 23, respectively. Each of the signal separators 21, 22 and 23 may include a demultiplexer to decode and separate the contents into a video signal, an audio signal, and an additional information signal, if any. The video signal and the audio signal separated by each of the signal separators 21, 22 and 23 are input to the video processor 31 and the audio unit 40, respecively.

The exemplary embodiments are not limited to the display apparatus including the plurality of contents input units 11, 12 and 13. Alternatively, a display apparatus may include a single contents input unit if the sensor 70 is provided for sensing viewing groups of viewers.

The video processor 31 processes a video signal so that contents are displayed as at least one screen on the display unit 35. One contents correspond to one screen, and two contents correspond to two screens. The video processor 31 may process a plurality of screens to be displayed in the form of a picture-in-picture (PIP) or a picture-on-picture (POP). The video processor 31 may process and display a video signal based on an aspect ratio preset corresponding to the number of contents to be displayed. The video processor 31 may include a software program or a hardware component, a decoder, a scaler, etc.

The display unit 35 may display an image processed in the video processor 31. The display unit 35 may include a liquid crystal display (LCD) panel having liquid crystal, an organic light emitting diode (OLED) panel having an organic light emitting diode, or a plasma display panel (PDP), and a panel driver to drive the panel. In this embodiment, the display unit 35 includes a flat surface where the contents are displayed.

The audio unit 40 includes a plurality of audio processors 51, 52 and 53 to convert audio signals separated by the signal separators 21, 22 and 23 into ultrasonic signals, and a plurality of sount output units 61, 62 and 63 to output the ultrasonic signals to the outside. In this embodiment, the audio unit 40 is implemented by a directional speaker or speakers capable of concentratedly outputting sound in a certain direction while maintaining an intensity and a direction of the sound, on the contrary to an existing non-directional speaker. The audio processors 51, 52 and 53 convert the audio signals into the ultrasonic signals in the form of beams having properties of high rectilinear propagation like light. An ultrasonic wave has a frequency greater than an audible frequency range (16~20KHz) for human hearing, so that humans cannot hear it in general. However, an inherent property (non-linearity) of a space causes an ultrasonic beam to be distorted in a predictable direction while passing through the space. Such a distortion may change the ultrasonic wave into a sound wave having a frequency component in an audible band. The audio processors 51, 52 and 53 convert audio signals into ultrasonic signals that can be distorted, so that a user can listen to sound in only a place where the distortion occurs.

As described above, the ultrasonic signal output through each of the sound output units 61, 62 and 63 has directivity so that it propagates in a certain direction. The degree of the directivity can be expressed in a directivity angle. The directivity angle indicates an angle between two points where a sound level is lower by 6 dB than that at opposite sides of a reference axis in a directivity pattern, i.e., a front axis of each of the sound output units 61, 62 and 63. As the directivity angle becomes larger, the directivity decreases but an audible region increases.

According to another exemplary embodiment, an audio signal output from the audio unit 40 and having directivity may be an acoustic signal rather than an ultrasonic signal. In this case, the audio unit 40 may include a plurality of acoustic phased arrays, and overlap the sound waves in a desired point by applying delay control to the output signal. That is, the audio signal is controlled to be output in a certain direction irrespective of the kind and characteristics of the audio signal.

The sensor 70 senses at least one viewing group positioned in front of the display apparatus 100. The viewing group includes at least one viewer, and indicates a group of viewers who watch the same screen. A distance between viewers who are regarded as belonging to one viewing group may be variably set up according to the size of the display apparatus 100 and a view space where the display apparatus 100 is located. If the view space is small and the display apparatus 100 is small, one or two viewers may constitute a viewing group. On the other hand, if the display apparatus 100 is large and installed in a public place, the number of viewers who belong to one viewing group may increase. The sensor 70 may include a camera for imaging a viewing group, and outputs an image to the controller 80.

The controller 80 controls the audio unit 40 so that an ultrasonic signal corresponding to an audio signal of the contents can be output toward a sensed viewing group. The controller 80 determines information about a position of a viewing group, the number of viewing groups, and the number of viewers who belong to each viewing group based on an image received from the sensor 70, and controls an output direction of the ultrasonic signal(s) based on the determined information. The controller 80 may use facial recognition technology to more precisely determine the position of each viewing group. That is, the controller 80 may recognize a viewer's eyes, a viewer's face direction, etc. to adjust the output direction of the ultrasonic signal. Also, the controller 80 may determine a viewer's posture, for example, a direction in which a viewer leans, or whether a viewer points a part of the viewer's body (e.g., a hand) or other objects in a certain direction, thereby adjusting the output direction of the ultrasonic signal. The controller 80 collects various information and determines a direction in which the ultrasonic signal will be output, thereby controlling the audio unit 40 to output the ultrasonic signal in the determined direction.

Alternatively, the sensor 70 may determine the information and provide it to the controller 80, and the controller 80 may control the output of the ultrasonic signal based on the information provided from the sensor 70.

If the display unit 35 outputs one screen, i.e., displays one contents, the controller 80 controls the audio processors 51, 52 and 53 to output an ultrasonic signal corresponding to the contents toward the sensed viewing groups. In this case, the directivity angle of the ultrasonic wave may be controlled so that all viewing groups can listen to it irrespective of the distribution and the number of the viewing groups.

On the other hand, if the display unit 35 displays a plurality of screens, the controller 80 determines which screen has the lowest side-view characteristic with respect to each of viewing groups G1 and G2, and thus, outputs a corresponding ultrasonic signal to each of the viewing groups. The side-view characteristic is determined considering a position relationship, e.g., an angle between the front of the screen and the viewing group. To determine the side-view characteristic, the controller determines for each viewing group which screen has the minimum angle between a virtual straight line extending between the viewing group and the center of each screen and a surface normal at the center of each screen. A viewing screen having the minimum angle is determined according to the position of each viewing group, and thus, a screen having the lowest side-view characteristic with respect to each viewing group becomes a viewing screen for each viewing group. Then, the controller 80 controls the audio processors 51, 52 and 53 and the sound output units 61, 62 and 63 so that an ultrasonic signal corresponding to a determined viewing screen can be output toward a corresponding viewing group.

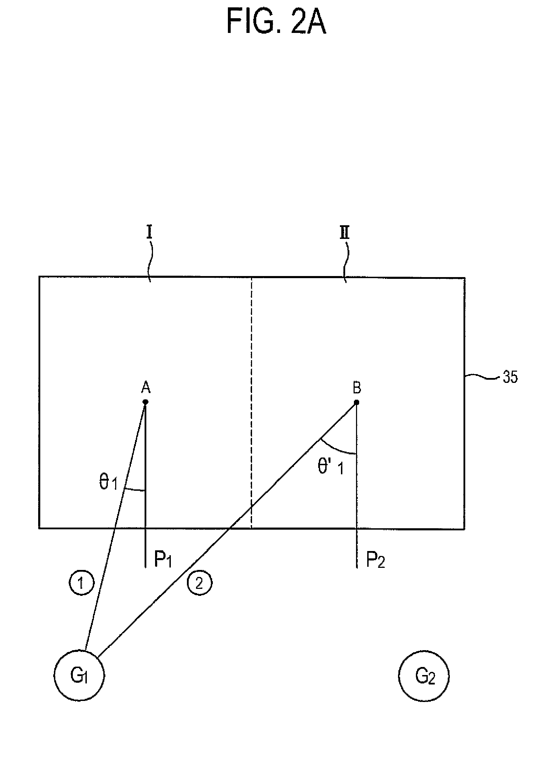

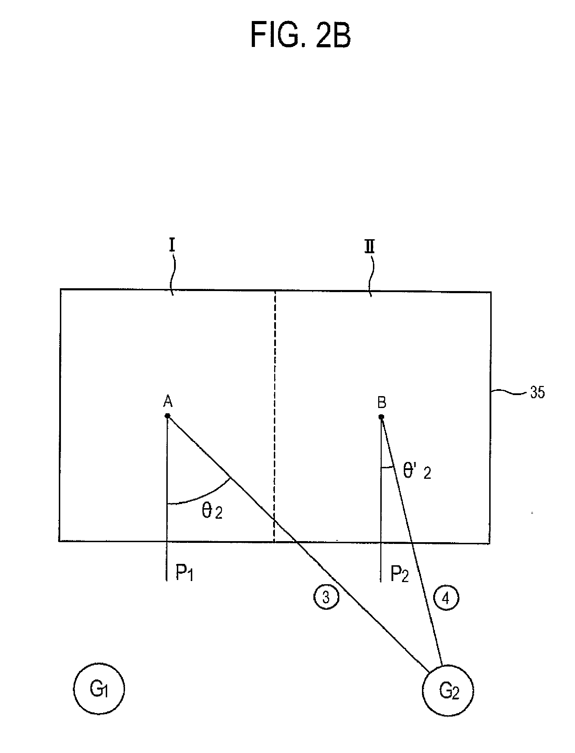

FIGs. 2A and 2B are views for explaining a method of determining a viewing screen for a viewing group based on an image sensed by the sensor 70, according to an exemplary embodiment. As shown in FIGs. 2A and 2B, the display unit 35 displays a first screen I and a second screen II, and two viewing groups G1 and G2 are positioned in front of the display unit 35. Typically, the first viewing group G1 positioned in front of the first screen I may watch the first screen I, and the second viewing group G2 positioned in front of the second screen II may watch the second screen II. First, in the case of the first viewing group G1 shown in FIG. 2A, an angle between a line ① extending from the first viewing group G1 to the center A of the first screen I and a surface normal P1 at the center A of the first screen I is θ1. Likewise, an angle between a line ② extending from the first viewing group G1 to the center B of the second screen II and a surface normal P2 at the center B of the second screen II is θ1'. Because θ1 is smaller than θ1', the first viewing group G1 has the lower side-view characteristic with respect to the first screen I than that of the second screen II. Therefore, the viewing screen for the first viewing group G1 is the first screen I, and thus, an ultrasonic signal corresponding to the first screen I is output toward the first viewing group G1.

On the other hand, in the case of the second viewing group G2 shown in FIG. 2B, an angle between a line ③ extending from the second viewing group G2 to the center A of the first screen I and a surface normal P1 at the center A of the first screen I is θ2. Likewise, an angle between a line ④ extending from the second viewing group G2 to the center B of the second screen II and a surface normal P2 at the center B of the second screen II is θ'2. Since θ'2 is smaller than θ2, the viewing screen for the second viewing group G2 is the second screen II, and thus, an ultrasonic signal corresponding to the second screen II is output toward the second viewing group G2.

The foregoing method of outputting an ultrasonic signal toward a viewing group in consideration of the side-view characteristic may be applied when only one viewing group is sensed. Alternatively, this method may be applied even when a display screen of the display unit 35 is vertically divided into a plurality of screens (upper and lower screesn) unlike the example shown in FIGs. 2A and 2B in which a display screen of the display unit 35 is horizontally divided into a plurality of screens (left and right screens).

According to the present embodiment, it is possible to listen to sound corresponding to a screen without an additional separate device such as a headset, an earphone, etc. even though a plurality of screens are displayed. Further, the display apparatus 100 automatically senses which screen is being watched by a viewer and correspondingly outputs sound, so that the viewer can conveniently watch the contents without manipulation about the direction of the sound.

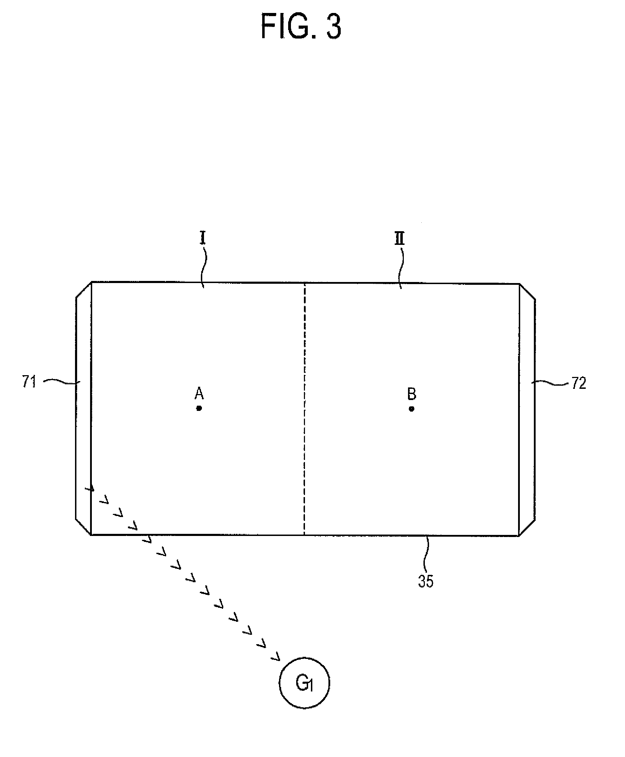

FIG. 3 is a view for explaining a method of determining a viewing screen in the display apparatus of FIG. 1, according to another exemplary embodiment. As shown therein, two sound output units 71 and 72 are arranged at opposite edges of the display unit 35. If a plurality of viewing screens are provided, for example, a first screen I and a second screen II, since a viewing group G1 is positioned in front of the dividing border of two screens, the controller 80 outputs an ultrasonic signal corresponding to a preferred viewing screen previously set among the plurality of screens toward the viewing group G1. In this embodiment, the first screen I displayed at a left side is set as the preferred viewing screen. If two broadcasting signals are displayed as a main screen and a sub screen, the preferred viewing screen may be set as the main screen. Typically, the main screen is displayed at the left side. Also, an ultrasonic signal corresponding to the second screen II which is not the preferred viewing screen, is not output toward the viewing group G1.

If a user wants to listen to an audio signal corresponding to the second screen II, the user may stop the output of the audio signal of the first screen I or move toward the second screen II.

If a display sreen of the display unit 35 is divided into upper and lower screens other than left and right screens, the preferred viewing screen may be set as the upper screen. Generally, the main screen is the upper screen, and the sub screen is the lower screen.

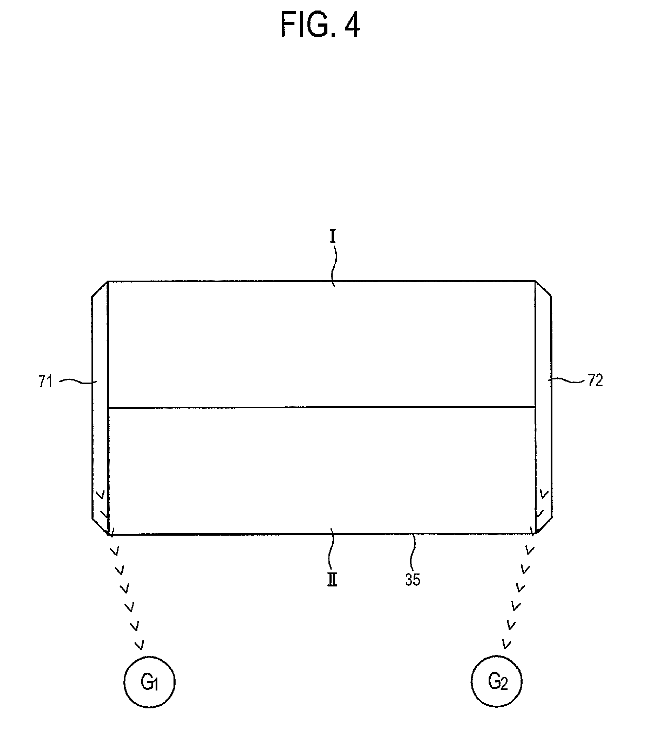

FIG. 4 is a view for explaining another method of determining a viewing screen in the display apparatus of FIG. 1, according to still another exemplary embodiment. A first screen I and a second screen II are displayed at an upper part and a lower part of the display unit 35, respectively, and two viewing groups G1 and G2 are positioned in front of the display apparatus 100. If the first screen I and the second screen II have the same side-view characteristic with regard to the first viewing group G1, the first screen I displayed at the upper part becomes a preferred screen to the first viewing group G1 according to FIG. 3, so that the first viewing group G1 can listen to an audio signal corresponding to the first screen I. Further, if the first screen I and the second screen II also have the same side-view characteristic with regard to the second viewing group G2, the first screen I displayed at the upper part also becomes a preferred viewing screen to the second viewing group G2, so that the second viewing group G2 can also listen to the audio signal corresponding to the first screen I.

According to the present embodiment, if there are a plurality of viewing groups G1 and G2 having one preferred viewing screen as described above, the controller 80 allocates the first and second screens I and II to the viewing groups G1 and G2 according to predetermined priority. For example, the first screen I and the second screen II are allocated to the first viewing group G1 and the second viewing group G2, respectively, so that the first and second viewing groups G1 and G2 can listen to different audio signals. If an audio signal corresponding to an undesired screen is heard, a user may move and be sensed by the sensor 70 in order to listen to a desired audio signal.

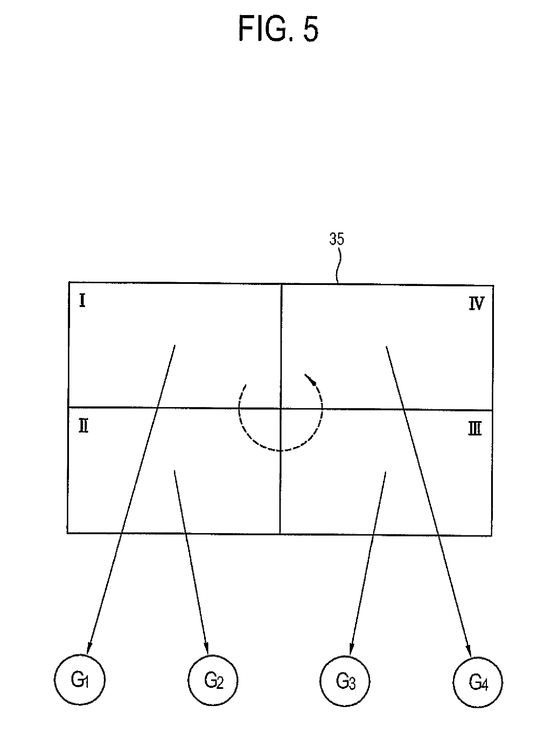

FIG. 5 is a view for explaining a method of determining a viewing screen in the display apparatus of FIG. 1, according to still another exemplary embodiment. In this embodiment, the display unit 35 displays the first through fourth screens I, II, III and IV. If the number of viewing groups G1, G2, G3 and G4 sensed by the sensor 70 is equal to the number of screens, the controller 80 controls ultrasonic signals corresponding to the screens I, II, III and IV designated counterclockwise from the first screen I to be output toward the first through fourth viewing groups G1, G2, G3 and G4, respectively. In general, if the number of viewing groups is equal to the number of screens, the controller 80 controls an ultrasonic signal corresponding to each screen to be output toward each of the viewing groups, respectively, according to a preset reference. According to this embodiment, the controller 80 does not determine the side-view characteristic with respect to viewing groups but determines only the number of displayed screens and the number of viewing groups, thereby quickly and effectively outputting corresponding audio signals. Further, in this embodiment, audio signals are output according to patterns of viewing groups even though each viewing group is not positioned directly in front of each screen of the display unit 35.

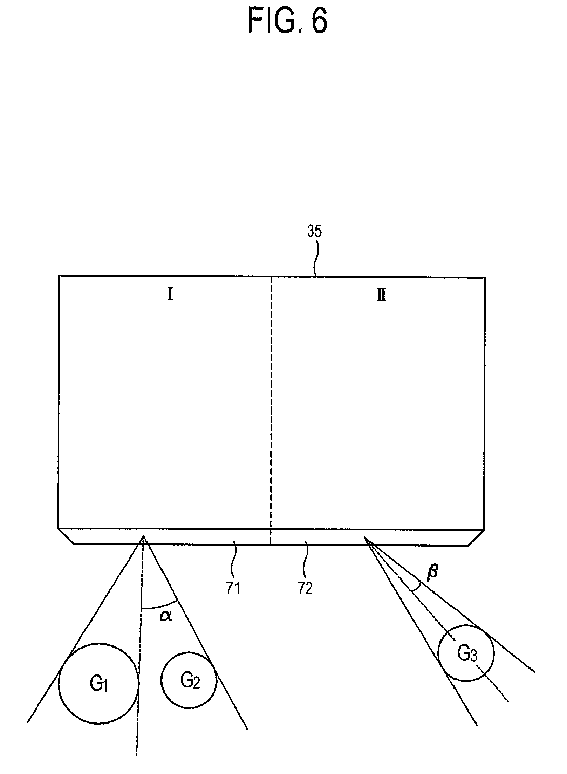

FIG. 6 is a view for explaining a method of adjusting a directivity angle of an ultrasonic signal in the display apparatus of FIG. 1, according to an exemplary embodiment. The controller 80 controls the audio processors 51, 52 and 53 to adjust the directivity angle of an ultrasonic signal according to at least one of the scale and the number of the viewing groups G1, G2 and G3. To adjust the directivity angle, the controller 80 may determine the number of viewers who belong to each viewing group. The number and the occupying space of the viewing groups G1 and G2 watching the first screen I are larger than the viewing group G3 watching the second screen II. In this case, the directivity angle α of an ultrasonic signal corresponding to the first screen I is larger than the directivity angle β of an ultrasonic signal corresponding to the second screen II. Thus, the directivity angle is adjusted corresponding to the scale of the viewing groups G1 and G2, so that the viewing groups G1 and G2 can both listen to the corresponding audio signal.

In the present embodiment, the directivity angle of an ultrasonic signal is defined as an angle between a virtual straight line, extending between the center of a sound output unit (e.g., one of the sound output units 61, 62 and 63) corresponding to a screen allocated to a viewing group or viewing groups and the center of the viewing group or viewing groups, and a virtual straight line extending between the center of the sount output unit and an edge of the viewing group or viewing groups, as shown in FIG. 6. Also, the controller 80 may increase the intensity of an ultrasonic signal based on the scale and the number of the viewing groups G1, G2, G3.

FIGs. 2A through 6 provide various methods for controlling the direction and the directivity angle of an audio signal, and the controller 80 may use another method in controlling the direction and the directivity angle of an audio signal according to a viewer's request or diverse viewing patterns.

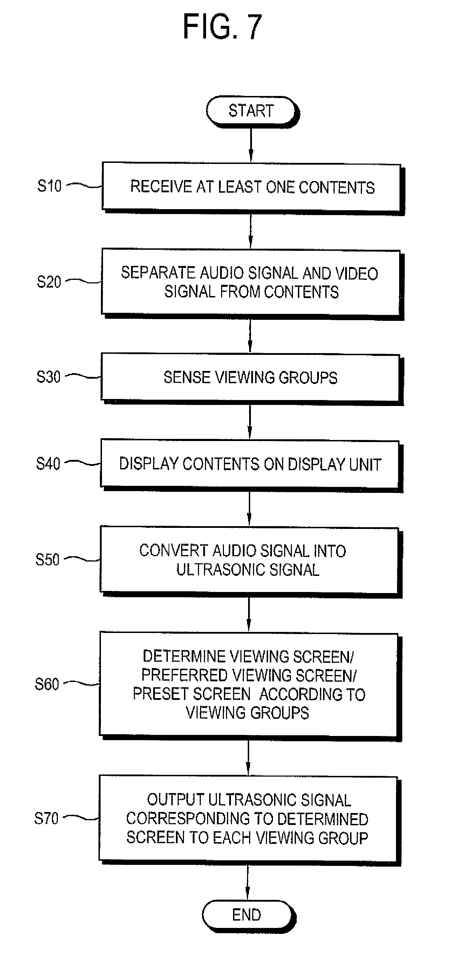

FIG. 7 is a flowchart for explaining a method of controlling an audio signal in the display apparatus of FIG. 1, according to an exemplary embodiment.

First, the signal receiver 10 receives at least one contents in operation S10, and the signal separators 21, 22 and 23 separate the received contents into an audio signal and a video signal in operation S20.

The sensor 70 senses viewing groups positioned in front of the display apparatus 100 in operation S30. Then, the video processor 31 processes the separated video signal to be displayed as at least one screen on the display unit 35 in operation S40.

The audio processors 51, 52 and 53 convert the audio signal into an ultrasonic signal in operation S50. The controller determines the side-view characteristics corresponding to the screens according to the viewing groups based on the images of the sensed viewing groups, respectively, and determines which viewing screen has the lowest side-view characteristic with respect to each of the viewing groups. Also, the controller 80 determines a preferred viewing screen or a preset screen, and determines corresponding ultrasonic signals to be output toward the viewing groups, respectively (if two or more ultrasonice signals are generated in operation S50), in operation S60. Through this process, the intensity or the directivity angle of the ultrasonic signal may be adjusted.

Then, the controller 80 controls the sound output units 61, 62 and 63 to output the ultrasonic signals corresponding to the determined screens toward the viewing groups, respectively, in operation S70.

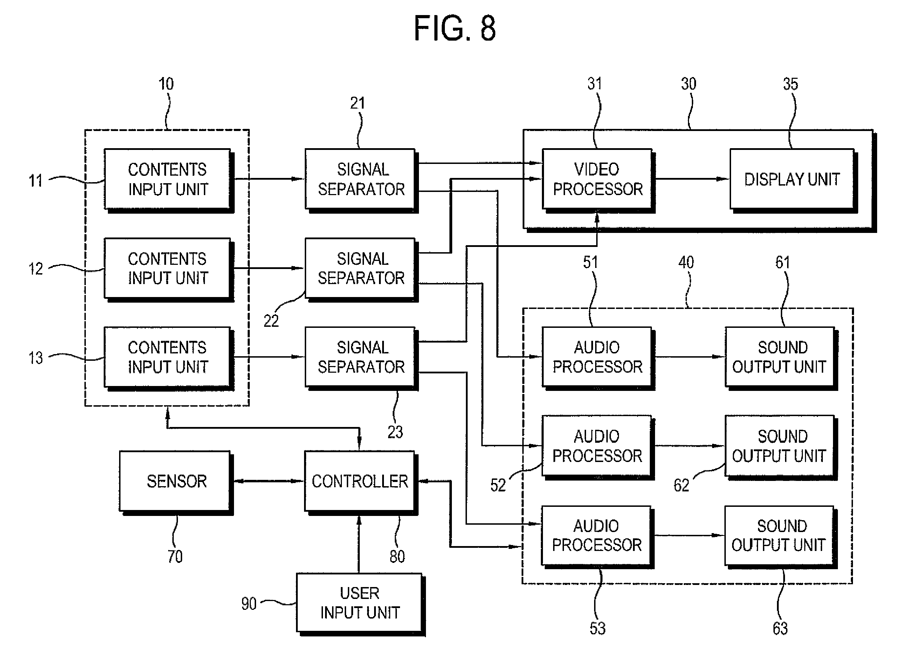

FIG. 8 is a block diagram of a display apparatus according to another exemplary embodiment.

As shown therein, the display apparatus 101 according to this embodiment further includes a user input unit 90. The user input unit 90 corresponds to a user interface for adjusting an output direction of an ultrasonic signal. Through the user input unit 90, a user may change the output direction of the ultrasonic signal, or change or set up a preferred viewing screen. Further, the user input unit 90 allows a user to change a portion previously set up or automatically controlled by the controller 80, and set up the scale of a viewing group.

The display apparatus may further include a user interface (UI) generator that provides various graphic user interfaces so that a user can easily utilize the user input unit 90.

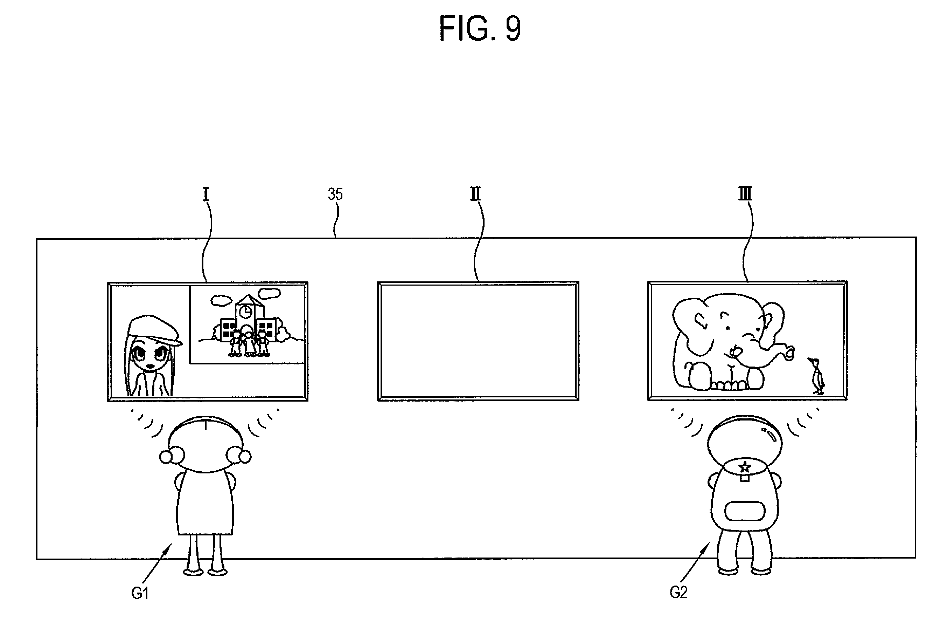

FIG. 9 is a view for explaining a method of outputting a video signal and an audio signal in the display apparatus according to still another exemplary embodiment. The display apparatus in this embodiment may be achieved by a large-sized display apparatus such as an advertising display apparatus installed in a public space, which is larger than the size of a common television. The display apparatus has substantially the same configuration as shown in FIGs. 1 and 8, and thus repetitive descriptions thereof will be avoided. The display unit 35 includes a plurality of screens I, II and III in which a plurality of video signals can be displayed.

According to the present embodiment, the screens I, II and III does not display any video signal before sensing a viewing group, but instead display video signals and output audio signals when sensing a viewing group in front of the display unit 35.

For example, as shown in FIG. 9, the second screen II among the screens I, II and III do not display video signals since no viewing group is sensed in front of the second screen II. On the other hand, viewing groups G1 and G2 are sensed in front of the first and third screens I and III, respectively, and thus the first and third screens I and III display corresponding video signals. That is, the display apparatus outputs a video signal on the corresponding screen when sensing a viewing group in front thereof by detecting a viewer's eyes watching the certain screen, or a viewer's gesture. In this case, the video signal may be displayed in the form of a pop-up. A user may be interested in a pop-up video signal, and power consumption may be reduced since the video signal is displayed only when sensing a viewing group.

On the other hand, the screen may display a certain still image if no viewing group is sensed.

When a viewing group is sensed and a video signal is displayed on the screen, the controller 80 controls the audio unit 40 to output an audio signal in a direction directly in front of the screen. Thus, a viewing group may listen to an audio signal corresponding to a relevant screen without listening to audio signals corresponding to other screens.

Alternatively, the controller 80 may output an audio signal toward a viewing group even though the viewing group is not positioned directly in front of the center of a screen, in which case it is possible to provide the viewing group with the audio signal corresponding to the screen.

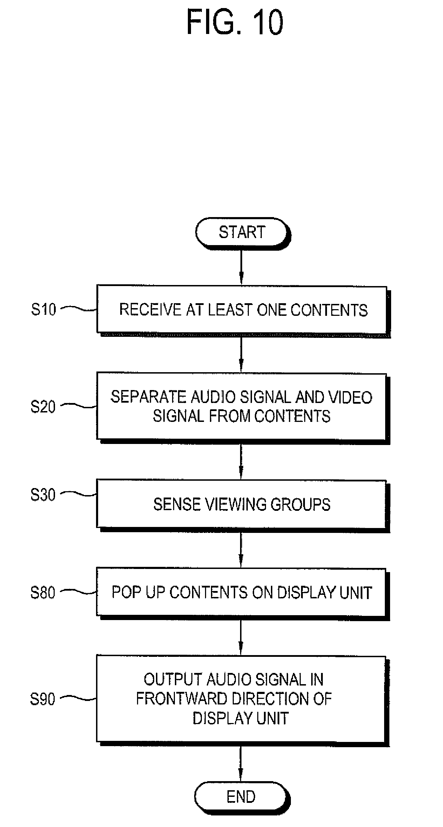

FIG. 10 is a flowchart for explaining a control method for the display apparatus of FIG. 9, according to an exemplary embodiment.

The display apparatus performs operation S10 of receiving at least one contents, operation S20 of separating the received contents into a video signal and an audio signal through the signal separators 21, 22 and 23, and operation S30 of sensing a viewing group(s) through the sensor 70 as described with reference to FIG. 7.

In this embodiment, the display apparatus 35 pops up contents when sensing a viewing group in operation S80.

The controller 80 outputs an audio signal toward the front of the display unit 35, i.e., in a frontward direction of the screen where the video signal is displayed, in operation S90. Thus, the viewing group in front of a certain screen can listen to only the audio signal for certain contents corresponding to the certain screen. Alternatively, the sensor may include a rotatable camera that does not passively image a viewing group but, instead, actively images the viewing group while changing an imaging direction as the viewing group moves. In this case, the controller may control the output direction of the ultrasonic signal to be changed corresponding to the rotation or the movement of the camera, so that it can quickly and correctly output an ultrasonic signal toward the viewing group without determining the side-view characteristics or the like of the viewing group.

As described above, the exemplary embodiments provide a display apparatus easy to listen to sound without any separate device or user's manipulation, and a control method of the same. Also, the exemplary embodiments provide a display apparatus providing various references about sound output, and a control method of the same.

Further, the exemplary embodiments provide a display apparatus capable of adjusting a directivity angle depending on a scale of a viewing group, and a control method of the same.

Although a few exemplary embodiments have been shown and described, it will be appreciated by those skilled in the art that changes may be made in these embodiments without departing from the principles and spirit of the inventive concept, the scope of which is defined in the appended claims and their equivalents.

## Claims

1. A display apparatus comprising:
a signal separator which separates an audio signal and a video signal from at least one contents;
an audio unit which processes and outputs the audio signal;
a video unit which processes and outputs the video signal;
a sensor which senses at least one viewing group viewing the video signal output by the video unit; and
a controller which controls the audio unit to output the audio signal toward the sensed viewing group.

2. The display apparatus according to claim 1,
wherein the video unit comprises a display unit and a video processor to process the video signal to be displayed as at least one viewing screen on the display unit, and
wherein if the video signal is displayed as a plurality of viewing screens on the display unit, the controller determines a viewing screen for the viewing group, among the viewing screens, based on an angle between a virtual line extending between the viewing group and a center of each of the viewing screens, and a surface normal at the center of each of the viewing screens, and controls the audio unit to output an audio signal corresponding to the determined viewing screen toward the viewing group.

3. The display apparatus according to claim 1,
wherein the video unit comprises a display unit and a video processor to process the video signal to be displayed as at least one viewing screen on the display unit, and
wherein if the video signal is displayed as a plurality of viewing screens, the controller controls the audio unit to output an audio signal corresponding to a preset viewing screen toward the viewing group.

4. The display apparatus according to claim 1,
wherein the video unit comprises a display unit and a video processor to process the video signal so that the contents are displayed as at least one viewing screen on the display unit,
wherein if a number of the at least one viewing group is equal to a number of the at least one viewing screen, the controller controls the audio unit to output audio signals so that each of the audio signals corresponds to a respective viewing screen of the at least one viewing screen is output toward a respective viewing group of the at least one viewing group.

5. The display apparatus according to claim 1,
wherein the audio unit further comprises an audio processor which converts the audio signal into an ultrasonic signal.

6. The display apparatus according to claim 1,
wherein the viewing group comprises at least one viewer, and
the sensor senses at least one of the viewer's eyes, the viewer's face direction, the viewer's posture and a direction pointed by a part of the viewer's body.

7. The display apparatus according to claim 1,
wherein the video unit comprises a display unit and a video processor to process the video signal to be displayed as a plurality of viewing screens on the display unit, and
wherein the controller controls the video processor to display the video signal on at least one viewing screen of the plurality of viewing screens based on the position of the sensed viewing group, and controls the audio unit to output the audio signal in a frontward direction of the at least one viewing screen on which the video signal is displayed.

8. The display apparatus according to claim 7,
wherein the video signal is popped up on the display unit.

9. A method of controlling a display apparatus, the method comprising:
separating an audio signal and a video signal from the contents;
sensing at least one viewing group viewing display of the video signal on the display apparatus; and
outputting the audio signal toward the sensed viewing group.

10. The method according to claim 9, wherein the display comprises a display unit,
wherein the method further comprises:
displaying the contents as at least one viewing screen on the display unit; and
if the video signal is displayed as a plurality of viewing screens on the display unit, determining a viewing screen for the viewing group, among the viewing screens, based on an angle between a virtual line extending between the viewing group and a center of each of the viewing screens, and a surface normal at the center of each of the viewing screens, and
wherein the outputting the audio signal comprises outputting an audio signal corresponding to the determined viewing screen toward the viewing group.

11. The method according to claim 9, wherein if the video signal is displayed as a plurality of viewing screens, an audio signal corresponding to a preset viewing screen is output toward the viewing group.

12. The method according to claim 9, wherein the display apparatus comprises a display unit,
wherein the method further comprises displaying the contents as at least one viewing screen on the display unit, and
wherein, if a number of the at least one viewing group is equal to a number of the at least one viewing screen, the outputting the audio signals comprises outputting audio signals so that each of the audio signals corresponds to a respective viewing screen of the at least one viewing screen is output toward a respective viewing group of the at least one viewing group.

13. The method according to claim 9, further comprising
determining at least one of a scale and a number of the at least one viewing group; and
adjusting a directivity angle or an intensity of the audio signal based on the at least one of the scale and the number of the at least one viewing group.

14. The method according to claim 9, wherein the processing the audio signal comprises converting the audio signal into an ultrasonic signal.

15. The method according to claim 9, wherein the display apparatus comprises a display unit, and
wherein the method further comprises popping up the video signal on the display unit based on a position of the sensed viewing group, and the outputting the audio signal comprises outputting the audio signal in a frontward direction of the display unit.
